# EUROPEAN PATENT APPLICATION

(11) **EP 4 016 736 A1**
(43) Date of publication of application: **22.06.2022**
(21) Application number: 21179904.4
(22) Date of filing: 16.06.2021
(51) Int. Cl.: H01Q 21/00, H04B 5/00, G06Q 20/20, G06Q 20/32, G06Q 20/34, G07F 7/08, H04B 7/04, G06K 7/10, G06F 3/041, G06F 3/046

(54) **METHOD AND SYSTEM FOR TARGETING NFC SENSORS**

(30) Priority: 16.12.2020 US 202017123654
(71) Applicant: Shopify Inc., Ottawa, ON K2P 2L8 (CA)
(72) Inventor: MAAN, Daanish, Ottawa (CA)
(74) Representative: Murgitroyd & Company

(57) **Abstract**

A computer system having a processor; at least one sensor for detecting and determining a location of a short-range communications attempt between a computing device and a short-range communications target; and a plurality of initiators for completing short-range communications attempts, wherein the processor is configured to enable one of the initiators to allow the computing device to complete the short-range communication transaction based on the determined location of the short-range communications attempt.

## Description

### FIELD OF THE DISCLOSURE

The present disclosure is related to near-field contactless transactions utilizing short range communication technology, and in particular relates to contactless transactions on larger screens.

### BACKGROUND

Many Point of Sale (POS) terminals now include the ability to receive a contactless or "tap" transaction, which is enabled through near field communications (NFC) technology. During such a transaction, the customer can bring a payment mechanism, such as a credit card, debit card, mobile device, wearable such as a watch or the watch band, jewelry, among other options, into proximity with the NFC reader on the POS terminal. In passive NFC mode, this will energize the antenna and chip within the payment mechanism and allow the POS terminal to receive information about the payment mechanism, as well as a response to a challenge. In active NFC mode, the payment mechanism can generate its own radio frequency (RF) field to provide a response to the challenge.

### SUMMARY

As NFC tap payments move away from dedicated spots on payment terminals and move behind larger touch surfaces such as tablets, countertop terminals, digital storefronts, kiosks, vending machines, subway or mall posters or billboards, among others, there is a new complexity for users on where they should perform the tap transaction. This can lead to buyer frustration in looking for a tap pad or location to tap the payment mechanism, potentially losing the sale or wasting precious sales associate time.

In some cases, a customer may not know where to perform a tap transaction, especially when the customer is interacting with a larger screen. For example, on a large kiosk screen the user may not know where the tap transaction should be focused. While this may be solved by providing directions to a particular tap location, for example through user interface elements, a better solution would be to allow the customer to tap on multiple areas or anywhere on the screen.

The subject-matter of the present application relates to embodiments in which a tap transaction can be recognized at multiple points or at any point on a screen.

In one aspect, a computer system may include a processor; at least one sensor for detecting and determining a location of a short-range communications attempt between a computing device and a short-range communications target; and a plurality of initiators for completing short-range communications attempts, wherein the processor may be configured to enable one of the initiators to allow the computing device to complete the short-range communication transaction based on the determined location of the short-range communications attempt.

In some embodiments, the short-range communications attempt may be a near field communications attempt.

In some embodiments, the sensor for determining the location may be an image detection sensor associated with the computer system.

In some embodiments, the sensor for determining the location may use an array of initiators associated with the computer system.

In some embodiments, one or more initiators from the array of short-range sensors may be energized in a pattern to determine the location.

In some embodiments, a non-energized initiator may be configured to listen for signals from the short-range communications target.

In some embodiments, the processor may be configured to enable by moving the one of the initiators into proximity with the short-range communications target.

In some embodiments, the processor may be configured to enable by angling the one of the initiators towards the short-range communications target.

In some embodiments, the plurality of initiators may form an array of initiators, and wherein the processor may be configured to enable by choosing an initiator from the array of initiators based on the determined location of the short-range communication target.

In a further aspect, a method at a computing device for targeting a short-range communications transaction may be provided, the method including detecting a short-range communications transaction attempt between the computing device and a short-range communications target; determining a location for the short-range communications transaction attempt; and based on the determined location, enabling an initiator for the computing device to complete the short-range communication transaction.

In some embodiments, the short-range communications transaction may be a near field communications transaction.

In some embodiments, the determining the location may be performed using an image detection sensor associated with the computing device.

In some embodiments, the determining the location may be performed using an array of initiators associated with the computing device.

In some embodiments, one or more initiators from the array of short-range sensors may be energized in a pattern to determine the location.

In some embodiments, a non-energized initiator may listen for signals from the short-range communications target.

In some embodiments, the enabling may comprise moving the initiator into proximity with the short-range communications target.

In some embodiments, the enabling may comprise angling the initiator towards the short-range communications target.

In some embodiments, the initiator may be part of an array of initiators, and wherein the enabling may comprise choosing the initiator from the array of initiators based on the determined location of the short-range communication target.

In still a further aspect, a non-transitory computer readable medium for storing instruction code, which, when executed by a processor of a computer system configured for targeting a short-range communications transaction, may cause the computer system to: detect a short-range communications transaction attempt between the computing device and a short-range communications target; determine a location for the short-range communications transaction attempt; and based on the determined location, enable an initiator for the computing device to complete the short-range communication transaction.

Accordingly, there is provided a method, a computer system and a computer program as detailed in the claims that follow.

### BRIEF DESCRIPTION OF THE DRAWINGS

**The** present disclosure will be better understood with reference to the drawings, in which:
**Figure 1** is a block diagram showing an example computer system capable of being used with the embodiments of the present disclosure.
**Figure 2** is a block diagram showing an example display having a single initiator behind the screen.
**Figure 3** is a block diagram showing an example kiosk having at least one camera pointed thereat.
**Figure 4** is a block diagram showing an example display having a plurality of initiators spaced apart behind the screen of the display.
**Figure 5** is a block diagram showing an example display having a plurality of initiators around the periphery of the display.
**Figure 6** is a block diagram showing an example display having an array of initiators behind a screen thereof.
**Figure 7** is a process diagram of an example process capable of being used with the present disclosure.
**Figure 8** is a block diagram showing the use of one or more initiators within an array of initiators behind a screen to find the location of the target.
**Figure 9** is a block diagram showing the use of one or more initiators within an array of initiators located around the periphery of the screen to find the location of the target.
**Figure 10** is a block diagram showing the angling of one or more initiators towards a located target.

### DETAILED DESCRIPTION

The present disclosure will now be described in detail by describing various illustrative, non-limiting embodiments thereof with reference to the accompanying drawings and exhibits. The disclosure may, however, be embodied in many different forms and should not be construed as being limited to the illustrative embodiments set forth herein. Rather, the embodiments are provided so that this disclosure will be thorough and will fully convey the concept of the disclosure to those skilled in the art.

In accordance with the embodiments of the present disclosure, a method to facilitate a short-range wireless communications transaction is provided. While the embodiments of the present disclosure are described below with regards to NFC, other short-range communication technologies such as radio frequency identification (RFID), Bluetooth^{™}, Infrared Data Association (IrDA) communications, among others, may potentially be used with embodiments described herein. The embodiments below describing NFC are therefore provided for illustration purposes only.

In accordance with the NFC standards, an initiator is the computing device initiating a transaction. It may also be referred to as an NFC reader. The initiator is the device which may start a transaction by energizing an NFC antenna and may use a single device discovery (SDD) protocol to locate and communicate with a target.

A target, as used herein, is any device which may provide a response to an initiator. For example, the target in a payment transaction may be a passive target such as a credit card or jewelry, where the NFC antenna on the credit card requires the field generated by the initiator to power a chip on the card to provide data to the initiator. In other cases, the target may be an active target which may be capable of generating its own RF field. Examples may include mobile devices, wearables such as smart watches, fobs, among others. The embodiments of the present disclosure are equally applicable to passive and active targets.

**As** screen sizes get larger, finding the location of an NFC reader (initiator) becomes more problematic. If the reader is on the edge of the screen, it may not be immediately obvious to a user where such reader is. The reader further may not be accessible to all users, such as those in wheelchairs, if placed too high or too far from the edge of a counter.

If the reader is at a location behind the screen, the user may not be able to find such reader easily. Further, such location may limit choices when creating graphical interfaces for such screen.

Therefore, in accordance with the embodiments of the present disclosure, a more flexible short-range communication system is provided which allows interaction between an initiator and a target from a plurality of locations, and in some cases anywhere on the screen. This is done by detecting that a short-range transaction is taking place, locating the position of the short-range transaction attempt, and then enabling the short-range transaction. Each is described below.

### Computer System

Short-range communication modules may have additional sensors associated with such a module/with a device within which they are all integrated. For example, an initiator may be part of a reference computing device such as a mobile platform, which has access to sensors such as a camera, a positional sensor such as an IR sensor, an accelerometer, among other options.

In other cases, the short-range communication module may be associated with a computing device such as a tablet, kiosk screen, countertop screen, among others. For example, one or more initiators may be behind or around the periphery of a touch screen. In this case, other sensors may further be associated with the computing device in some cases, such as a camera, a positional sensor such as an IR sensor, an accelerometer, among other options. However, in some cases no other sensors besides one or more initiators may be present.

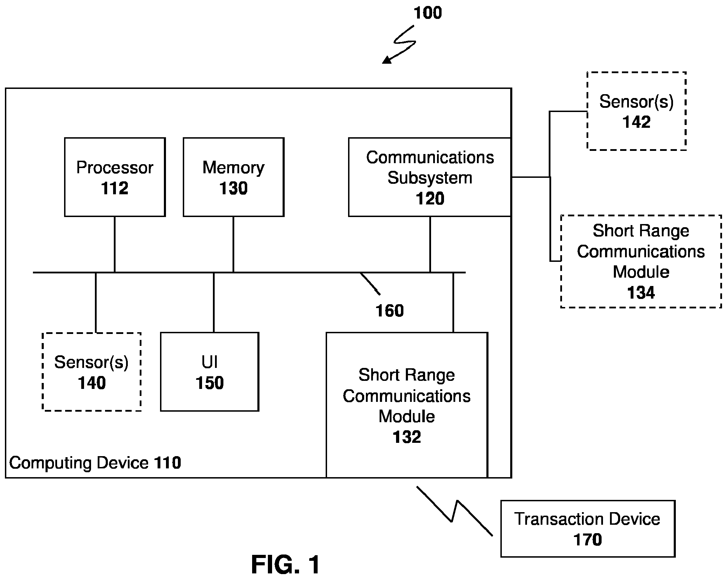

Therefore, reference is now made to **Figure 1****,** which shows an example, simplified, computing system 100. In the example of **Figure 1****,** a computing device **110** may include a processor **112** and a communications subsystem **120,** where the processor **112** and the communications subsystem **120** cooperate to perform the methods of the embodiments described herein.

Processor **112** is a hardware processor configured to execute programmable logic, which may be stored, along with data, on computing device **110** and shown in the example of **Figure 1** as memory **130.** Memory **130** can be any tangible, non-transitory computer readable storage medium such as optical (e.g., CD, DVD, etc.), magnetic (e.g., tape), flash drive, hard drive, or other memory known in the art.

Alternatively, or in addition to memory **130,** computing device **110** may access data or programmable logic from an external storage medium, for example through communications subsystem **120.**

Communications subsystem **120** allows computing device **110** to communicate with other devices or network elements and the design of communications subsystem **120** may be based on various types of communications being performed. Further, communications subsystem **120** may comprise a plurality of communication technologies, including any wired or wireless communication technology.

In the embodiment of **Figure 1****,** computing device **110** may include a short-range communications module **132.** For example, computing device **110** may consist of one or more initiators for NFC transactions, among other options. In the example of **Figure 1****,** short-range communications module **132** is internal to computing device 110. However, in other embodiments, the short-range communications module may be external to the computing device **110.** For example, the short-range communications module may be an external sensor wired to, or communicating with, the computing device **110,** for example using communications subsystem **120.** This is shown in the embodiment of **Figure 1** as short-range communications module **134.**

Further, other sensors may be associated with the computing device **110.** Such sensors may be internal sensors, shown as sensors **140** in the embodiment of **Figure 1****.** In other cases, the sensors may be external and are shown as sensors **142** in the embodiment of **Figure 1****.** In certain circumstances, a combination of internal and external sensors may also be used with computing device **110** within computer system **100.** In other cases, no other sensors besides short range communication module **132** or short range communication module **134** may be present.

If present, sensors **140** or **142** may consist of various sensors that can be used to analyse whether a transaction attempt has been initiated, and find, or assist in finding, the location of such transaction attempt. For example, in some cases, the sensors may comprise cameras or other image capture modules. In other cases, sensors may include proximity modules such as an IR detector, RADAR, LIDAR, among others. In still other situations, the sensors may include motion sensors such as passive infrared (PIR), microwave, ultrasonic, tomographic motion detectors, gesture detectors, among other options. In other cases, the sensors can include bump sensors such as accelerometers, pressure sensors, among others. In various circumstances, a plurality of sensors may exist and be associated with the computing system. Thus, a combination of the various types of sensors may be available within the computing system.

In the embodiment of **Figure** 1, computing device **110** further includes a user interface (Ul) **150.** In the embodiments of the present disclosure, the user interface **150** includes at least one display screen. The screen can be a touch screen which allows user interaction in some cases. Further, the screen may be a large screen such as a tablet, kiosk, vending machine, subway or mall poster or billboard, among others.

In some embodiments, user interface **150** can further include any auditory, visual or a haptic feedback mechanism to provide a user with information. For example, user interface **150** could include any of lights, speakers, vibration mechanisms, among other options.

Communications between the various modules within a computing device can be done in a variety of ways. In the example of **Figure 1****,** a bus **160** is shown to allow communications between the various modules. However, this is merely provided for illustration purposes and other types of communication between modules is possible.

As described below, in operation, a transaction device **170** may be brought into proximity with a display screen of user interface **150** in order to have information stored on, or derived by, transaction device **170** transmitted to the short-range communications module **130.** For example, transaction device **170** may be any payment token such as a credit card with a near field communications antenna thereon. The short-range communications module **132** may be an NFC reader. In this case, when the transaction device **170** is brought into proximity of the short-range communications module **132,** energy from the short-range communications module **132** will energize the NFC antenna on the transaction device **170.** In this case, the transaction device **170** will provide information back to the short-range communications module, including information on the device, as well as potentially a response to a challenge that is issued by the short-range communications module **132.**

In other embodiments, transaction device **170** may be a different type of fob. For example, the transaction device **170** may be a watch, watchband, mobile device such as a smart phone, jewelry, among other such devices as may be equipped with short-range communications hardware (e.g., an NFC transceiver).

**While** the embodiments described herein refer to initiators in NFC transactions, in other cases, short range communications module **132** may be an RFID reader and the transaction device may be a card or fob with the corresponding RFID technology. For example, the display may be a kiosk display associated with a building directory, which further has the ability to summon an elevator for those with the correct security badge. In this case, the short-range communications module **132** may issue a challenge to the transaction device **170** which will then be responded to from the transaction device **170.** The short-range communications module **132** can then compare the results from the challenge with the expected results in order to determine whether to accept the transaction or not.

In still further cases, transaction device **170** can be any short-range communications device capable of interacting with the short-range communications module **132.**

**While** the embodiment of **Figure 1** shows a single computing device with internal or external sensors and/or internal or external short-range communications modules, in other cases, a plurality of computing devices may exist within a computer system, and the present disclosure is not limited to any particular number of computing devices or configuration of computer system.

### Display Configurations

Various display configurations could be utilized with the embodiments of the present disclosure. Such display configurations would be utilized with the computing system of **Figure 1****,** where the processor and other similar functionality could be located either within the display or at a location separately from the display.

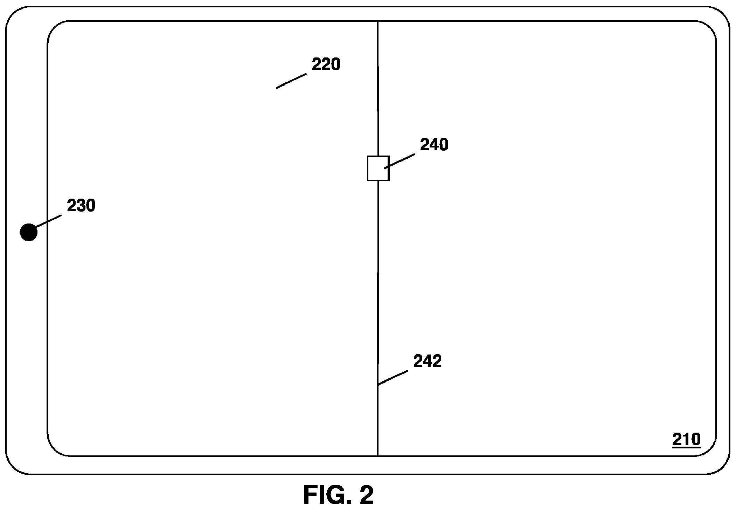

One example is shown with regard to **Figure 2****.** In the embodiment of **Figure 2****,** a display system **210** may be a tablet, countertop display, or similar display. Display system **210** includes a screen surface **220,** and in one embodiment may include a camera **230.** Further, a short-range communications module **240** such as an initiator may be positioned behind the display **220.** In the embodiment of **Figure 2****,** the short-range communications module **240** may be moved utilizing a mechanism **242** which may position the short-range communications module **240** at various locations behind screen **220.**

In some cases, display system **210** may include other sensors such as pressure sensors, bump sensors, among other such sensors.

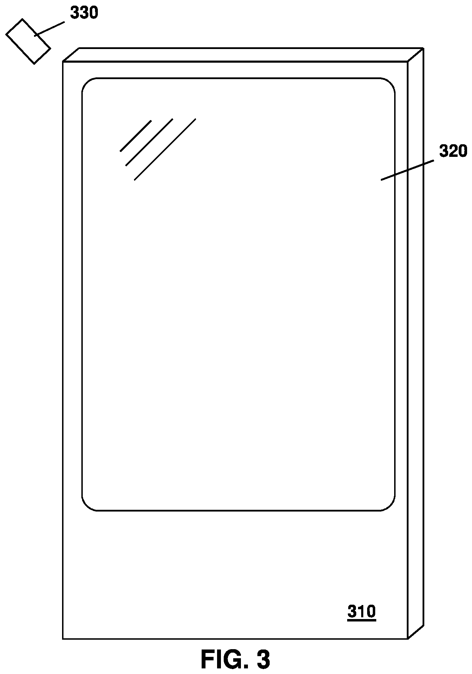

**The** embodiment of **Figure 3** shows an example vending kiosk in which a user may stand and interact with a vertical screen. Such kiosk may, for example, be located within a mall, store, bus station, train station, airport, office tower, among other locations. The kiosk **310** includes a computing device such as that described above with regards to **Figure 1****,** with a display **320** being accessible. One or a plurality of initiators may be located behind the screen or around the periphery of the screen is described below.

Further, in the example of **Figure 3****,** a camera **330** is located above the screen. In the example of **Figure 3****,** only a single camera is provided. However, in other embodiments multiple cameras could be provided. Further, while the embodiment of **Figure 3** shows the camera overhead, in other cases it could be in any location, including forming part of the kiosk **310.**

Other sensors could also be associated with kiosk **310.**

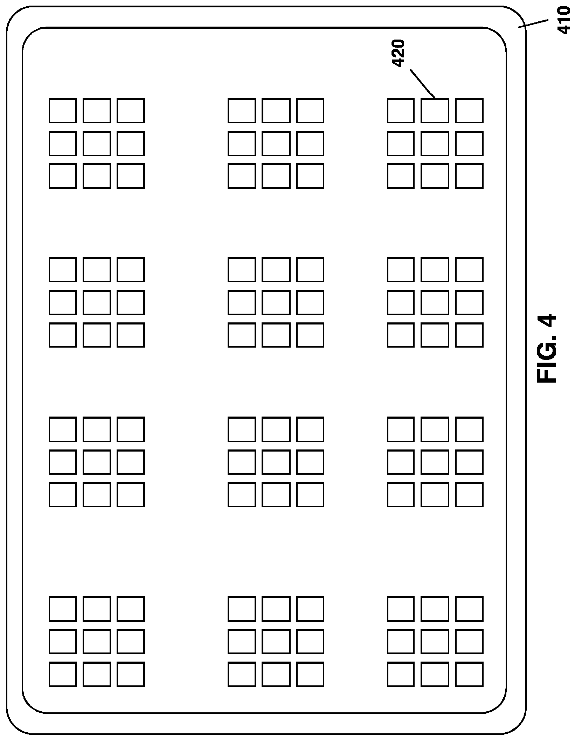

Referring to **Figure 4****,** which shows an example of a display system **410** in which a plurality of initiators are located behind a screen. For example, in **Figure 4** groups of nine initiators **420** are distributed behind the screen. While the example of **Figure 4** shows nine initiators grouped together, in some cases, individual initiators who could be spaced apart behind the screen, or larger or smaller groups could be used.

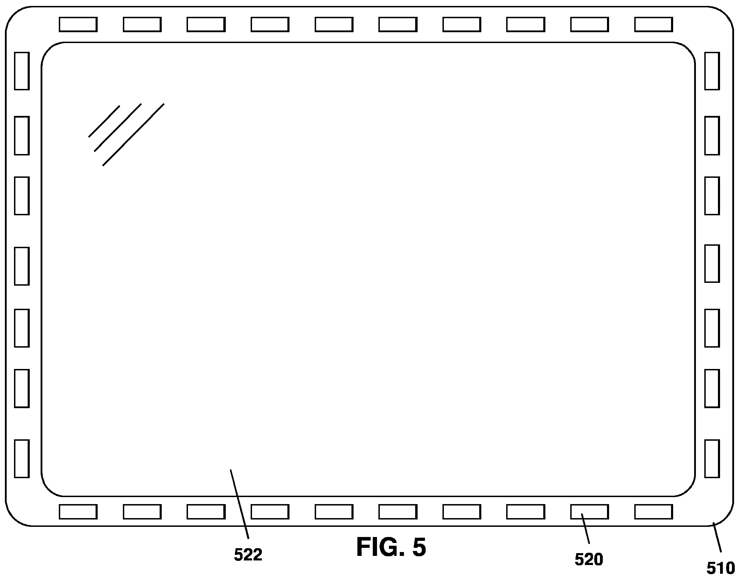

In still further embodiments, the initiators could be distributed around the periphery of the screen. Reference is now made to **Figure 5****,** which shows a display system **510** and an array of initiators **520** spaced about a peripheral area of a screen **522.**

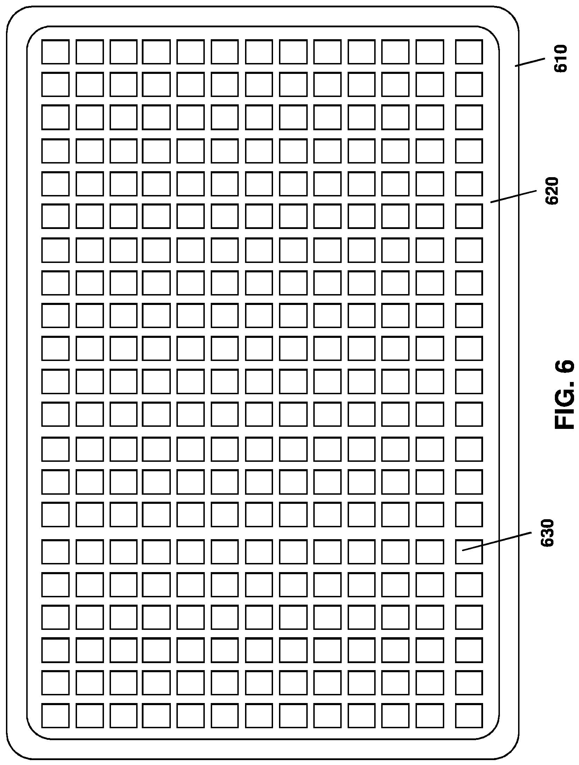

In still further embodiments, an evenly distributed array may be placed behind a screen. Reference is now made to **Figure 6****,** which shows a display system **610** having a screen **620.** An array of initiators or short-range communications modules **630** are placed behind the screen. The spacing of the initiators from each other could be optimized to ensure maximum coverage area while minimizing the number of initiators in some cases. In some embodiments, this may be achieved by configuring the initiators such that upon activation, the fields associated with adjacent initiators do not overlap with each other. In this way, unintended interference may be prevented or lessened. Notably, so configuring initiators may reduce or minimize the number of initiators required to achieve a desired coverage area of a screen due to reduction or elimination of overlapping coverage areas in the associated fields. Additionally or alternatively, because with such a configuration of initiators, a given area of the display may be, in effect, covered by only a single initiator (i.e., with its associated field) rather than multiple initiators with overlapping fields-or, put another way, each area of the screen may have an respective one of the initiators providing coverage for that portion of the screen)-such a configuration of initiators may ensure or increase the likelihood that a target device interacts with a single initiator during each transaction attempt (e.g., with the initiator covering that portion of the screen).

While the embodiments of **Figures 2** to **6** show various display configurations, other display configurations would be evident to those skilled in the art having regard to the disclosure below. The embodiments of **Figures 2** to **6** are therefore only provided for illustration purposes.

### Enabling A Short-Range Transaction

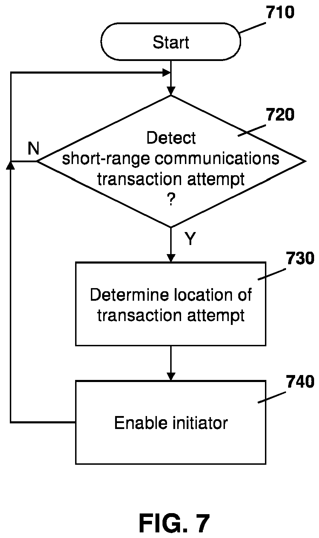

Utilizing a computer system such as that described above with regard to **Figure 1****,** and the configuration of a display screen such as that provided in **Figures** 2 to 6 a system and process for enabling a short-range communications transaction at a plurality of locations, or any location, proximate a display is now described. Reference is now made to **Figure 7****.**

In the embodiment of **Figure 7****,** the process starts at block **710** and proceeds to block **720** in which a check is made to determine whether a short-range communications transaction attempt has been detected.

In a simplest form, user interaction with a user interface such as a touch screen, can be used to detect that a short-range transaction is occurring. For example, at a menu board for ordering food, once the user indicates that he or she wants to pay, this may provide an indication that a short-range transaction is occurring.

In other cases, sensors such as a camera may provide an indication that a short-range transaction is occurring. For example, sensors **140** or **142** from the computer system **100** of **Figure 1****,** or cameras **230** or **330** from **Figures 2** or **3** may be used for this purpose. Image recognition software, either within computer system **100** or at a processor external to computer system **100,** may find that a user is opening a wallet, has a card in her hand, is moving a watch or mobile phone towards the screen, among other options.

In further cases, secondary short-range communications may be used to detect a transaction is occurring. For example, a Bluetooth detector can detect the presence of a customer in front of a large touchscreen by detecting the customer's mobile device. In some cases, if the device does not move for more than a threshold period of time, this could mean that the customer has stopped in front of the screen and is not merely walking by.

In still further cases, a display may have one or more initiators associated therewith. For example, in some cases, a display may have a plurality of initiators around the periphery of such display, as shown with regard to **Figure 5****.** In other cases, one or more initiators may be located behind the display, as shown with the embodiments of **Figures 2****,** **4** and **6****.** In some cases, an array of initiators may be available to the computer system. In this case, the computer system may periodically energize one or more of the initiators and determine whether a signal is received either by the same initiator or by another initiator within the array of initiators. Even if such signal is not readable, the presence of such signal may indicate that a payment mechanism is proximate to the display and therefore indicated that a short-range communications transaction may be occurring.

For example, initiators may be energized and provide a Polling Request Frame in accordance with ISO/IEC 18093:2013, "Information technologyTelecommunications and information exchange between systems -- Near Field Communication -- Interface and Protocol (NFCIP-1)", the contents of which are incorporated herein by reference. The same initiators or other initiators may then listen for a Polling Response Frame.

In other cases, if the screen is only used as a payment terminal, then the determining that a transaction is occurring may always be true.

From **Figure 7****,** if the computing device does not detect a short-range communication attempt has been started, the process continues to loop to block **720** until a short-range communications transaction attempt is detected.

Once a short-range communications transaction attempt is detected, the process proceeds from block **720** to block **730.** At block **730,** the location of the transaction attempt on the display screen is determined. Specifically, once a transaction attempt has been detected, in accordance with the embodiments of the present disclosure, a location for the transaction attempt is determined. This may be done in various ways. Example manners of determining a location for the transaction attempt will now be discussed.

In a first example, one or more sensors associated with the computing device of the screen can be used to find the location of the transaction. For example, a camera and image processing may be used to find a tap location on the screen. Specifically, referring to **Figure 3****,** if a user is interacting with the kiosk **310,** a camera **330** may detect that transaction attempt by utilizing image recognition to show a tap of a credit card, mobile phone, watch, jewelry, among other options, at a location on the screen **320.** Various options including pre-programmed depth recognition, reference points on the screen or in the frame, or other similar techniques could be used, along with image processing, at processor **112** from the computing device of **Figure 1** or at a remote server, to determine the location of the tap.

If a plurality of cameras exists, the location determination may involve a cross-reference between the images from the two cameras to pinpoint the location of the tap.

In another example, a light curtain, pressure sensor, RADAR, LIDAR, short range communications module, or other similar sensor can be used to find the location of the tap. Such additional sensors can be used instead of, or in addition to, a camera. Therefore, in some cases, a combination of sensors can be used to find the location of the transaction attempt.

In yet another, an array of initiators can be used to find the location of the transaction attempt. For example, one or more initiators within the array of initiators can be used to generate an RF field. In some cases, such RF field may be generated using a Single Device Detection (SDD) algorithm as described in the NFC standards to find the target. Specifically, as provided for by ISO/IEC 18092:2013, the initiator could first listen for a signal on an RF frequency, and if no signal is detected then the initiator could initiate a signal. After a certain amount of time, a Polling Request Frame may be sent and a Polling Response Frame may be listened for at the initiator.

In some cases, the sending of the Polling Request Frame and receiving of the Polling Response Frame could be done a plurality of times without initiating a transaction in order to determine the location of the target.

Specifically, the one or more initiators could be used to find the location of the transaction attempt in various ways. For example, in one case, initiators that will not interfere with each other may be simultaneously powered and responses from a target may be listened for. The listening may be performed from the same initiators that sent the signal in some cases. In other cases, the listening may also include initiators in the array that were not powered.

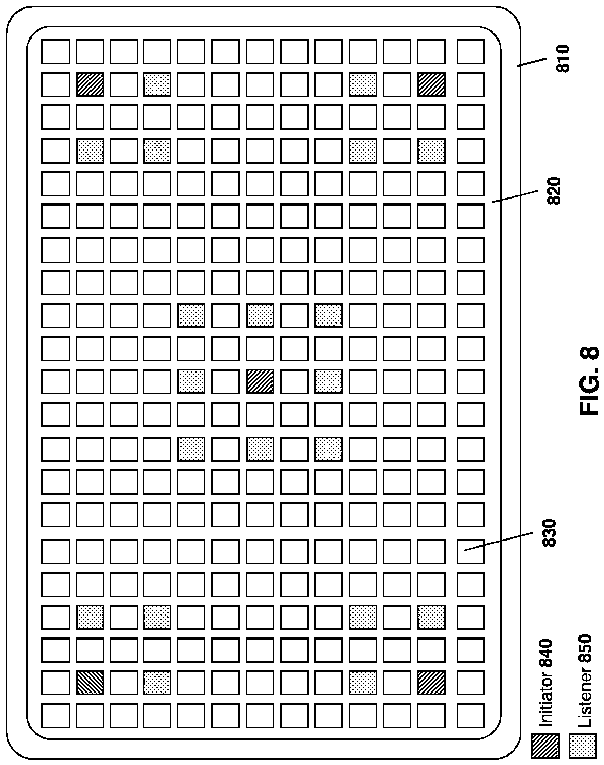

For example, referring to **Figure 8****,** this figure shows the example of an array of initiators behind a screen. In this case, a device **810** includes a screen **820** with an array of initiators **830** behind such screen.

One or more initiators that would not interfere with each other could be simultaneously powered up, as shown with initiators **840.** Such initiators **840** would then listen for a response from a target. Additionally, in the example of **Figure 8****,** a plurality of listeners **850** could also listen for a response from the target. As used herein, a listener is an initiator that is not sending a signal but is merely listening for a response.

Further, in some cases, signal strength indicators could be used to find the location of the target. For example, if a plurality of initiators **840** and listeners **850** are listening for a response, the signal strength of the response at each of the initiators may provide information regarding the location of the target. This may for example use triangulation to find the location of the target.

The triangulation may be used to make a determination of the location of the target in some cases. In other cases, the triangulation may be used to refine a further search for the target. In particular, if the triangulation indicates that that the target is in a particular quadrant, sector or area of the screen, then the search could be narrowed to the quadrant, sector or area of the screen by powering initiators and repeating the search process in that quadrant, sector or area of the screen.

In other cases, a pattern may be used to power the plurality of initiators in the array. For example, the first initiator may be powered, and at a subsequent time a second initiator may be powered, thus allowing a search for the target to take place. The pattern may provide a linear sweep of the surface of the screen, may work from the center outwards, from the corners inwards, among other options.

**The** pattern may power an equal number of initiators at each step or may power different numbers of initiators at each step depending on interference potential. For example, when working from the corners inwards, the pattern may power the corners first, but then may power fewer initiators as the pattern approaches the center of the screen and the initiators being powered become closer to each other.

In some cases, two or more initiators may synchronize with each other and be powered simultaneously, regardless of interference potential.

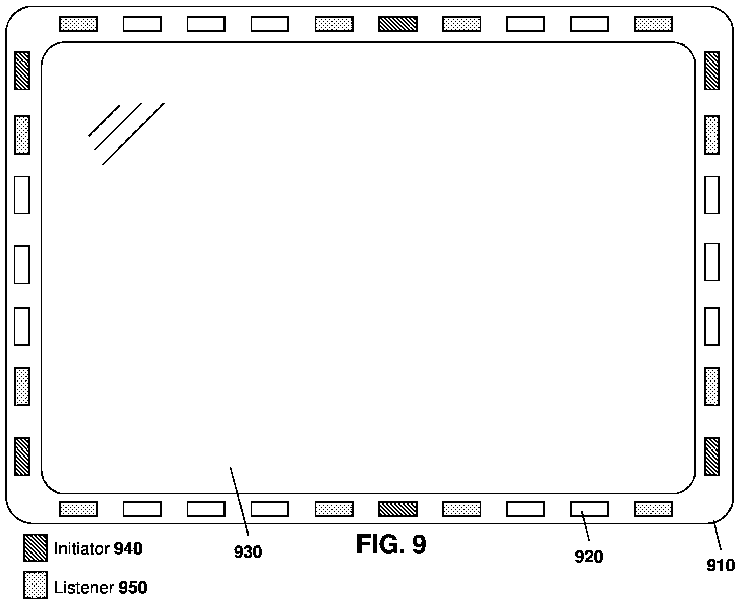

In some cases, the array of initiators may be located behind the screen. In other cases, the array of initiators may be located around the periphery of the screen. For example, referring to **Figure 9****,** this figure shows a display system **910** having a plurality of initiators **920** around the periphery of a screen **930.** These initiators can be powered as shown with initiators **940** and further, unpowered initiators referred to as listeners **950** may also listen for the signal in a similar manner to that described with regard to **Figure 8****.**

**The** search for the location in the examples of **Figures 8** and **9** could be done over a period of time. For example, the initiators may not detect a response from a target at a first time period and therefore may continue to search. In some cases the search may involve the choosing of different initiators and performing a pattern of search. In some cases, the target may not be ready to respond, and therefore, the repeated attempts may allow for a response after a period of time. Other options are possible.

Further, in some cases, the detection must occur for a threshold period of time. For example, while the location of the target may be found, the target may in this case still be moving towards the screen and the location of the target may change. Therefore, in one embodiment the location of the target may need to be stable for a threshold time before the determination of the location can be verified.

The use of the array of initiators may, in some cases, be combined with other sensors to identify the location of the transaction attempt.

Referring again to **Figure 7****,** once a location for the transaction attempt has been determined, the transaction may be enabled. Specifically, the process proceeds from block **730** to block **740** in which an initiator that is to be used for completing the transaction is enabled. In most cases, and in accordance with the NFC standards, a single initiator is used to communicate with the target to obtain information and complete the transaction, such as a financial transaction.

In a first embodiment, an initiator may be moved into proximity with the determined location. This may, for example, comprise using motors to physically move an initiator close to a target. For example, in the embodiment of **Figure 2****,** a motor or screw may be used as part of mechanism **242** to reposition initiator **240** to the location proximate the transaction attempt.

In the case where there are one or more initiators behind the screen, this may involve moving the closest initiator to the location of the tap or transaction attempt.

In the case where there are one or more initiators at the periphery of the screen, it may involve moving the closest initiator to a location adjacent to or near to the tap or transaction attempt. For example, using a mechanism **242** such as that in **Figure 2** but with an initiator on the periphery of the screen.

In other embodiments, the transaction may be enabled by angling an initiator to facilitate the RF transaction. For example, the antenna on the initiator may be angled to provide for the strongest signal reception.

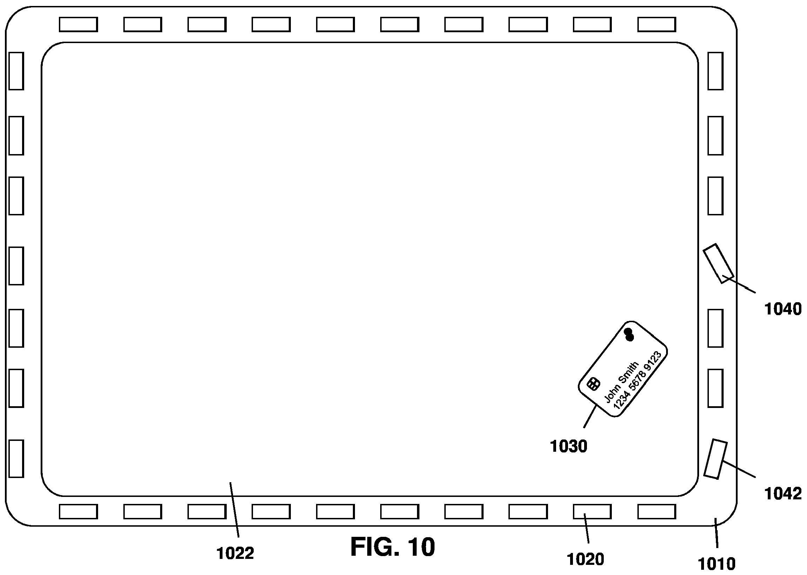

Reference is now made to **Figure 10****.** In the embodiment of **Figure 10****,** a display system **1010** includes a plurality of initiators **1020** around the periphery of the screen **1022.** Such initiators may have been used to find the location of a target **1030** in some cases. In other cases, the initiators in combination with other sensors may have been used to find the location of target **1030.** In still further cases, other sensors without the aid of initiators **1020** may have been used to find the location of target **1030.**

Once the location of target **1030** is found, then one or more initiators may be angled to obtain better reception at the antenna of such initiator based on the location of the target. In the embodiment of **Figure 10****,** initiators **1040** and **1042** are shown to have been rotated. In this case, the transaction may only use one of such initiators but the other initiator may be listening passively and may supplement the received signal. A computing device such as the computing device of **Figure 1** could be part of the display system **1010** or could be separate from such display.

In other embodiments, the initiator may be both moved and angled to facilitate the transaction.

In other cases, when an array of initiators exists, such as with the embodiment of **Figure 6****,** the enabling the transaction may involve selecting an initiator to perform the transaction. This may include finding the initiator with the strongest connection to the target. It may, in other cases, involve finding the initiator with the lowest latency to the target. The selecting the initiator from the array of initiators can occur whether the array is behind the screen or located around the periphery of the screen. The selected initiator can then be used for the transaction.

Once such initiator is enabled, a payment cycle in a monetary transaction can be carried out. For example, if the transaction is a payment transaction, the credit card information, along with the challenge response, can be processed and a communications path established between the computer system and a transaction clearinghouse to determine whether the funds will be transferred. For an RFID transaction, the response to a challenge can be compared with the expected response and if the two match, an action may occur such as an elevator being summoned. In other cases, other types of transactions utilizing short range communications could be enabled based on whether the standard validation for such transaction exists.

In **Figure 7****,** once the transaction is complete the process may proceed back to block **720** to wait for the next transaction.

The use of the above embodiments allows for the transaction to take place in multiple locations on a screen. This then allows for a customer to be able to perform the transaction without frustration or intervention of a sales clerk. On larger screens, the above embodiments facilitate accessibility as the height of a transaction does not matter, and therefore a customer in a wheelchair or with limited mobility can equally interact with the screen.

Further, on very large screens, a plurality of transactions could take place simultaneously using the above embodiments, where each transaction could enable an initiator from a subset of the initiators. The embodiments described above are therefore scalable and do not rely on particular screen sizes.

Based on the above, a computer system can use sensors to detect a transaction attempt. Based on such detection, the computer system can then detect/identify a location of the transaction attempt and enable the transaction at that location. The enabling the location may involve moving, angling and/or powering one or more short-range communications modules based on the location. This facilitates the transaction occurring at least at a plurality of locations, and in some cases anywhere, on a large display surface and thereby provides for increased usability by customers, increased accessibility, increased options for the design of the user interface, among other benefits.

While the embodiments above describe a short-range communications module and secondary sensors as being distinct, in some embodiments the short-range communications module and secondary sensors may be part of the same physical component. Further, the embodiments describe at least one short-range communications module which could be configured behind a screen, around the periphery of a screen, or both. The short-range communications modules could be distributed or placed in various locations, and in some cases be configured in an array or pattern. One or more of the short-range communications modules could be movable or capable of being angled. However, in some cases systems could exist where some short-range communications modules are stationary and others are movable or capable of being angled. The present disclosure is thus not limited to any particular configuration for the short-range communication modules and/or the secondary sensors.

The elements described and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps thereof, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions.

Thus, in one aspect, each method described above, and combinations thereof may be embodied in computer executable code that, when executing on one or more computing devices, performs the steps thereof. In another aspect, the methods may be embodied in systems that perform the steps thereof and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

The present teaching may also extend to the features of one or more of the following numbered clauses:

### CLAUSES

1. A computer system comprising:
   a processor;
   at least one sensor for detecting and determining a location of a short-range communications attempt between a computing device and a short-range communications target; and
   a plurality of initiators for completing short-range communications attempts, wherein the processor is configured to enable one of the initiators to allow the computing device to complete the short-range communication transaction based on the determined location of the short-range communications attempt.
2. The computer system of clause 1, wherein the short-range communications attempt is a near field communications attempt.
3. The computer system of clause 1, wherein the sensor for determining the location is an image detection sensor associated with the computing system.
4. The computer system of clause 1, wherein the sensor for determining the location uses an array of initiators associated with the computer system.
5. The computer system of clause 4, wherein one or more initiators from the array of short-range sensors is energized in a pattern to determine the location.
6. The computer system of clause 5, wherein a non-energized initiator is configured to listen for signals from the short-range communications target.
7. The computer system of clause 1, wherein the processor is configured to enable by moving the one of the initiators into proximity with the short-range communications target.
8. The computer system of clause 1, wherein the processor is configured to enable by angling the one of the initiators towards the short-range communications target.
9. The computer system of clause 1, wherein the plurality of initiators form an array of initiators, and wherein the processor is configured to enable by choosing an initiator from the array of initiators based on the determined location of the short-range communication target.
10. A method at a computing device for targeting a short-range communications transaction, the method comprising:
   detecting a short-range communications transaction attempt between the computing device and a short-range communications target;
   determining a location for the short-range communications transaction attempt; and
   based on the determined location, enabling an initiator for the computing device to complete the short-range communication transaction.
11. The method of clause 10, wherein the short-range communications transaction is a near field communications transaction.
12. The method of clause 10, wherein the determining the location is performed using an image detection sensor associated with the computing device.
13. The method of clause 10, wherein the determining the location is performed using an array of initiators associated with the computing device.
14. The method of clause 13, wherein one or more initiators from the array of short-range sensors is energized in a pattern to determine the location.
15. The method of clause 14, wherein a non-energized initiator listens for signals from the short-range communications target.
16. The method of clause 10, wherein the enabling comprises moving the initiator into proximity with the short-range communications target.
17. The method of clause 10, wherein the enabling comprises angling the initiator towards the short-range communications target.
18. The method of clause 10, wherein the initiator is part of an array of initiators, and wherein the enabling comprises choosing the initiator from the array of initiators based on the determined location of the short-range communication target.
19. A non-transitory computer readable medium for storing instruction code, which, when executed by a processor of a computer system configured for targeting a short-range communications transaction, cause the computer system to:
   detect a short-range communications transaction attempt between the computing device and a short-range communications target;
   determine a location for the short-range communications transaction attempt; and
   based on the determined location, enable an initiator for the computing device to complete the short-range communication transaction.
20. The non-transitory computer readable medium of clause 19, wherein the short-range communications transaction is a near field communications transaction.

## Claims

1. A method at a computing device for targeting a short-range communications transaction, the method comprising:
detecting a short-range communications transaction attempt between the computing device and a short-range communications target;
determining a location for the short-range communications transaction attempt; and
based on the determined location, enabling an initiator for the computing device to complete the short-range communication transaction.

2. The method of claim 1, wherein the short-range communications transaction is a near field communications transaction.

3. The method of claim 1 or 2, wherein the determining the location is performed using an image detection sensor associated with the computing device.

4. The method of claim 1 or 2, wherein the determining the location is performed using an array of initiators associated with the computing device.

5. The method of claim 4, wherein one or more initiators from the array of short-range sensors is energized in a pattern to determine the location.

6. The method of claim 5, wherein a non-energized initiator listens for signals from the short-range communications target.

7. The method of any of the preceding claims, wherein the enabling comprises moving the initiator into proximity with the short-range communications target.

8. The method of any of the preceding claims, wherein the enabling comprises angling the initiator towards the short-range communications target.

9. The method of any of the preceding claims, wherein the initiator is part of an array of initiators, and wherein the enabling comprises choosing the initiator from the array of initiators based on the determined location of the short-range communication target.

10. A computer system comprising:
a processor;
at least one sensor; and
a plurality of initiators, wherein the system is configured to carry out the method of any of the preceding claims.

11. The computer system of claim 10, wherein the at least one sensor is configured for detecting and determining the location of the short-range communications attempt between the computing device and the short-range communications target.

12. The computer system of claim 10 or 11, where in the plurality of initiators are configured for completing short-range communications attempts.

13. The computer system of any of claims 10 to 12, wherein the processor is configured for carrying out the enabling operation of any of claims 7 to 9.

14. A computer program comprising instructions, which when executed on a processor of a computer system, is configured to cause the computer system to carry out the method of any of claims 1 to 9.
